Europäisches Patentamt

European Patent Office

Office européen des brevets

(11) Veröffentlichungsnummer: **0 300 090**
**A2**

(12) **EUROPÄISCHE PATENTANMELDUNG**

(21) Anmeldenummer: **87116640.1**

(22) Anmeldetag: **11.11.87**

(51) Int. Cl.4: **F16F 13/00 , F16F 1/38**

(30) Priorität: **23.07.87 DE 3724432**

(43) Veröffentlichungstag der Anmeldung:
**25.01.89 Patentblatt 89/04**

(84) Benannte Vertragsstaaten:
**DE FR GB IT**

(71) Anmelder: **Firma Carl Freudenberg**
**Höhnerweg 2-4**
**D-6940 Weinheim/Bergstrasse(DE)**

(72) Erfinder: **Hamaekers, Arno**
**Siedlungsstrasse 60**
**D-6946 Gorxheimertal(DE)**
Erfinder: **Rudolph, Axel**
**Buchenhorst 1**
**D-6100 Darmstadt(DE)**

(74) Vertreter: **Weissenfeld-Richters, Helga, Dr.**
**Höhnerweg 2**
**D-6940 Weinheim/Bergstrasse(DE)**

(54) **Hülsengummifeder.**

(57) Eine überwiegend senkrecht zu ihrer Achsrichtung belastete Hülsengummifeder, bei der zwei einander radial umschließende Stützhülsen (1, 2) durch einen Federkörper (3) aus Gummi verbunden sind. Der Federkörper enthält flüssigkeitsgefüllte Kammern (8, 9, 10, 11), die zumindest teilweise durch Verbindungsöffnungen (12) verbunden sind. Die die Kammern (8, 9, 10, 11) voneinander trennenden Trennwände des Federkörpers (3) haben herstellungsbedingt eine Erstreckung, die die einbaubedingte Erstreckung übertrifft. Sie verbinden dadurch die verwendungsfähige Hülsengummifeder in einem elastisch zusammengestauchten Zustand.

Fig. 1

Schnitt A-A

## Hülsengummifeder

Die Erfindung betrifft eine überwiegend senkrecht zu ihrer Achsrichtung belastete Hülsengummifeder, umfassend zwei einander in paralleler Zuordnung umschließende Stützhülsen und einen dazwischen angeordneten Federkörper aus Gummi, der die äußere der Stützhülsen mit im wesentlichen in radialer Richtung vorspringenden Stegen berührt, wobei die Stege einer in der Achse der Stützhülse errichteten, gedachten senkrechten Ebene spiegelbildlich zugeordnet sind und gemeinsam mit stirnseitigen Abschlußwänden und der äußeren der Stützhülsen wenigstens zum Teil flüssigkeitsgefüllte Kammern begrenzen, die wenigstens teilweise durch Verbindungsöffnungen verbunden sind.

Eine Hülsengummifeder der vorgenannten Art is aus der EP-OS 9 210 bekannt. Der aus Gummi bestehende Federkörper ist dabei sowohl außen- als auch innenseitig durch Vulkanisierung an den einander umschließenden Stützhülsen festgelegt, was im Zuge der sich an die Vulkanisierung anschließenden Abkühlung zum Auftreten von Schrumpfspannungen insbesondere in den die Kammern voneinander trennenden Stegen führt. Diese Schrumpfspannungen, die sich bei Einleitung von Schwingungen großer Amplitude mit weiteren Zugspannungen ungünstig überlagern können, können die Gebrauchseigenschaften und die Gebrauchsdauer der vorbekannten Hülsengummifeder nachteilig beeinflussen.

Der Erfindung liegt die Aufgabe zugrunde, eine Hülsengummifeder zu zeigen, bei der während des Gebrauchs nennenswerte Zugspannungen innerhalb des Federkörpers nicht vorhanden sind.

Diese Aufgabe wird erfindungsgemäß dadurch gelöst, daß die Stege zwischen den beiden Stützhülsen elastisch zusammengestaucht sind auf eine Erstreckung, die kleiner ist als die herstellungsbedingte Erstreckung.

Der aus Gummi bestehende Federkörper der erfindungsgemäßen Stützhülse ist bei seiner Herstellung lediglich mit der inneren der beiden Stützhülsen durch Vulkanisierung verbunden, was es gestattet, seine in radialer Richtung nach außen vorspringenden Teile und insbesondere die Stege zuvor oder während des Einfügens in die äußere der beiden Stützhülsen zusammenzustauchen auf eine Erstreckung, die wesentlich kleiner ist als die herstellungsbedingte Erstreckung. Neben der Aufhebung der durch die Abkühlung nach der Vulkanisierung verursachten, negativen Schrumpfspannung gelingt es hierdurch, in dem Gummikörper der verwendungsfähigen Hülsengummifeder positive Druckspannungen zu erzeugen, was die Erzielung gleichbleibender Gebrauchseigenschaften über eine besonders lange Gebrauchsdauer ermöglicht. Die Stauchung des Federkörpers soll einerseits wenigstens so groß sein, daß die herstellungsbedingten Schrumpfspannungen beseitigt sind, sie soll andererseits Werte nicht überschreiten, bei denen während der bestimmungsgemäßen Verwendung der Hülsengummifeder eine Schädigung oder Zerstörung des Federkörpers zu erwarten ist. Der im einzelnen zur Anwendung gelangende Stauchungsgrad wird durch die lineare Stauchung ausgedrückt. Sie läßt sich nach der Formel $\Delta_L / L$ errechnen, in welcher $\Delta_L$ die Kürzung des Federkörpers in einer bestimmten Richtung angibt und L die zugehörige Länge im ungestauchten Zustand.

In Fällen, in denen die Stege des Federkörpers in Achsrichtung der Hülsengummifeder ausschließlich durch sich senkrecht zu seiner Achse erstreckende Flächen begrenzt sind, erfolgt die Stauchung regelmäßig nur in radialer Richtung. Die Ermittlung der linearen Stauchung ergibt sich in diesem Falle auf der Grundlage der Ausdehnungsverminderung in radialer Richtung.

Ein davon abweichender Fall ist gegeben, wenn der Federkörper herstellungsbedingt eine Gestalt aufweist, in welcher jeder Steg oder Teilsteg in axialer Richtung beiderseits durch gleichsinnig geneigte Schrägflächen begrenzt ist, welche während der Durchführung des Stauchvorganges eine Umverlagerung erfahren, so daß sie anschließend der Achse der Hülsengummifeder im wesentlichen senkrecht zugeordnet sind. Der Ermittlung der linearen Stauchung wird in diesem Falle die tatsächliche Längenverminderung der Schrägflächen zugrunde gelegt, welche diese während ihrer Überführung in eine Position erfahren, in der sie der Achse der Hülsengummifeder im wesentlichen senkrecht zugeordnet sind.

Für die Herstellung des Federkörpers kann irgendeine der einschlägig angewendeten Gummiqualitäten verwendet werden, zweckmäßig eine solche mit einer Härte Shore A 30 bis 80.

Die lineare Stauchung sollte in Anwendungsfällen, in denen eine statische Vorlast nicht abzutragen ist, zweckmäßig zwischen 5 und 10% liegen. Neben einer guten Gebrauchsdauer wird in diesem Falle eine besonders gute Isolierung der eingeleiteten Schwingungen erreicht.

In Anwendungsfällen, in denen es demgegenüber mehr auf die Erzielung einer verbesserten Dämpfungswirkung bei Einleitung von Schwingungen ankommt, sowie auf eine erhöhte Steifigkeit hinsichtlich der gegenseitigen Zuordnung der einander umschließenden Stützhülsen hat sich demgegenüber die Anwendung einer größeren linearen Stauchung vorteilhaft bewährt, wobei Werte von 20 bis 50% ohne weiteres erreicht werden können. Wechsellasten aus entgegengesetzten Richtungen werden von solchen Ausführungen sicher und unter Vermeidung von störenden Zugspannungen in irgendeinem Teilbereich des Federkörpers aufgefangen. Die Anwendung entsprechender Hülsengummifedern empfiehlt sich daher vor allem in Fällen, in denen extreme Belastungssituationen zu erwarten sind, beispielsweise im Bereich der Achsaufhängung von Kraftfahrzeugen.

Der Federkörper soll möglichst so gestaucht werden, daß die sich ergebende, resultierende Vorspannung der betriebsbedingt aufzunehmenden, statischen Vorlast entgegengesetzt ist. Unter diesem Gesichtspunkt sind der Federkörper und insbesondere die Stege zweckmäßig in radialer Richtung gestaucht, wenn die aufzunehmenden Kräfte überwiegend in radialer Richtung eingeleitet werden. Die gegenseitige Zuordnung der Stege zueinander und zur Krafteinleitungsrichtung sowie die Dimensionierung der Stege lassen sich bei einer solchen Ausführung relativ einfach errechnen unter Berücksichtigung der Federelastizität des verwendeten Gummikörpers, der Krafteinleitungsrichtung sowie der Größe der tatsächlich eingeleiteten Kräfte. Ersatzweise ist auch eine axiale Stauchung des Federkörpers möglich. Sie empfiehlt sich in Fällen, in denen die statisch wirksame Vorlast in axialer Richtung eingeleitet wird, Kombinierte Ausführungen, bei denen die Stege sowohl in radialer als auch in axialer Richtung gestaucht sind, werden bevorzugt. Sie sind universell verwendbar und lassen es zu, in schräger Richtung eingeleitete Kräfte aufzunehmen und Schwingungen in gezielter Weise zu dämpfen, die solche Kräfte überlagern. Die Stützhülsen haben im Regelfalle ein rotationssymmetrisch begrenztes Profil. Abweichungen sind möglich und empfehlen sich vor allem in Fällen, in denen es die Einbaubedingungen oder die erwünschte Art der Federelastizität erfordern.

Die Stege können so ausgebildet und/oder angeordnet sein, daß die resultierende, durch die Stauchung verursachte Kraft (R1), die der aufzunehmenden, statischen Last entgegengesetzt ist, größer ist als die durch die Stauchung verursachte resultierende Kraft (R2), die in Richtung der aufzunehmenden Last wirksam sind. Die Differenz zwischen R1 und R2 soll möglichst mit der Größe der aufzunehmenden statischen Last übereinstimmen.

Unter Verwendung eines Federkörpers, dessen Stege herstellungsbedingt in Flächen enden, welche die Achse der anvulkanisierten, inneren Stützhülse in übereinstimmenden Abständen umschließen, wird in diesem Falle eine gebrauchsfähige Hülsengummifeder erhalten, bei der die Achse der inneren Stützhülse relativ zur Richtung der aufzunehmenden, statischen Vorlast verlagert ist, d.h. zumeist zur Achse der äußeren Stützhülse in senkrechter Richtung nach oben. Die infolge er statischen Vorlast in die innere Stützhülse eingeleiteten, z.B. von oben angreifenden Lasten werden dadurch in der Weise kompensiert, daß sich wiederum eine Übereinstimmung in der gegenseitigen Zuordnung der beiden Achsen der Stützhülsen ergibt. Die Relativbeweglichkeit der beiden Stützhülsen ist dadurch in jeder Richtung ausgeglichen, was es erlaubt, auf die Verwendung von Sekundärfedern zu verzichten. Auch ergibt sich hinsichtlich der Montage entsprechend ausgebildeter Gummifedern insofern eine wesentliche Vereinfachung, als die richtige Zuordnung der Hülsengummifeder zur Richtung der abzustützenden Last ohne weiteres anhand der relativen Zuordnung der inneren zur äußeren der beiden Stützhülsen erkennbar ist. Die Verwendung von häufig übersehenen Markierungen ist daher entbehrlich.

Die äußere der beiden Stützhülsen besteht im Regelfalle ebenfalls aus einem in sich geschlossenen Rohr. In Hinblick auf eine Vereinfachung der Einfügung der Stege, welche in axialer Richtung durch Einschieben vorgenommen wird, hat es sich als vorteilhaft bewährt, wenn die Stege auf den in radialer Richtung nach außen weisenden Flächen mit Metallauflagen versehen sind. Letztere können aus Blechen bestehen und sind auf ihrer Außenseite zweckmäßig der Form der Innenseite der äußeren dr Stützhülsen angepaßt.

Die Stege können im Bereich der stirnseitigen Abschlußwände außenseitig an metallischen Stirnringen festgelegt sein, welche in der fertigen Hülsengummifeder auf der von den Stegen abgewandten Seite von nach innen weisenden Vorsprüngen der äußeren Stützhülse umgriffen sind.

Die Stirnringe haben einen Außendurchmesser, der mit dem Innendurchmesser der äußeren der Stützhülse im wesentlichen übereinstimmt. Sie gewährleisten eine besonders formstabile, gegenseitige Zuordnung zwischen den unabhängig voneinander gefertigten Einzelteilen der erfindungsgemäßen Hülsengummifeder. Die Stirnringe können gemeinsam mit der äußeren Stützhülse Segmente von Ringkanälen begrenzen, wobei die Ringkanäle einen Bestandteil der Verbindungsöffnungen bilden, welche mindestens zwei voneinander verschiedene Kammern er erfindungsgemäßen Hülsengummifeder flüssigkeitsleitend verbinden. Es ist ganz selbstverständlich, daß für eine gute Abdichtung der Stirnringe gegenüber der äußeren Stützhülse Sorge getragen werden muß, was beispielsweise durch eine Dichtlippe aus Gummi erfolgen kann, welche während der Festlegung in der äußeren Stützhülse bleibend unter einer Vorspannung an die abzudichtenden Flächen angepreßt wird. Eine Oberflächenbeschichtung aus Gummi kann gegebenenfalls die anderen Oberflächenanteile der Stirnringe überziehen und vermag hier das Auftreten von Korrosionserscheinungen zu verhindern. Sie bildet zweckmäßig einen einstückigen Bestandteil des Federkörpers aus Gummi.

Auch die die Stege außenseitig abschließenden Bleche und wenigstens einer der Stirnringe können einteilig verbunden sein. Die richtige Zuordnung zu den Stegen während deren Herstellung und Verfestigung läßt sich hierdurch wesentlich vereinfachen. Die Stege können im mittleren Bereich ihrer axialen Länge herstellungsbedingt eine größere radiale Erstreckung haben als im Bereich der stirnseitigen Enden, was eine spätere Verspannung im mittleren Bereich der Hülsengummifeder ergibt. Eine kegelige Zunahme der radialen Erstreckung in Richtung des mittleren Teils der axialen Länge der Hülsengummifeder hat sich besonders bewährt und läßt sich besonders einfach montieren in einer äußeren Stützhülse, die etwa in der Mitte ihrer axialen Erstreckung geteilt erzeugt ist.

Die in der statischen Belastungsrichtung unterhalb der Mittellinie der inneren der Stützhülsen angordneten Stege können eine größere Breite in Umfangsrichtung haben als die oberhalb der Mittellinie angeordneten Stege, was es ermöglicht, eine besonders große Differenz zwischen der nach oben gerichteten, resultierenden Kraft (R1) und der nach unten gerichteten, resultierenden Kraft (R2) zu erzielen. Eine entsprechend ausgebildete Hülsengummifeder zeichnet sich daher in einem Belastungszustand, in welchem sich die Mittellinien der inneren und der äußeren der Stützhülsen miteinander decken, durch eine besonders große Tragfähigkeit aus.

Die optimale gegenseitige Zuordnung der im Regelfalle vorhandenen, vier Stege kann durch Versuche ermittelt werden. Für Anwendungen im Bereich der Aufhängung von Kfz-Achsen hat es sich indessen bewährt, wenn die unteren Stege miteinander einen Winkel von 30 bis 60° und die oberen Stege miteinander einen Winkel von 120 bis 150° einschließen. Neben einer guten Tragfähigkeit in senkrechter Richtung hat in diesem Falle eine für das angesprochene Anwendungsgebiet ausgezeichnete Führung der inneren der Stützhülsen in der äußeren der Stützhülsen erzielt, was von großem Vorteil ist. Die Stege der erfindungsgemäßen Hülsengummifeder können auch in Gestalt von Teilstegen erzeugt sein, die einen in radialer Richtung nach außen zunehmenden, gegenseitigen Abstand voneinander haben, wobei der Abstand durch eine gegeneinander gerichtete, axiale Verspannung der Teilstege in der betriebsbedingten Hülsengummifeder im wesentlichen eliminiert ist. Zweckmäßig ist der durch den axialen Abstand gebildete, im wesentlichen V-förmig nach außen geöffnete Spalt zwischen einem jeden Paar von Teilstegen etwa im mittleren Teil der Erstreckung der Stege vorgesehen. In diesem Falle ist die sich in axialer Richtung ergebende Federsteifigkeit der Hülsengummifeder in beiden Richtungen ausgeglichen.

In anderen Anwendungsfällen kann es vorteilhaft sein, in den beiden axialen Richtungen voneinander abweichende Federsteifigkeiten zu erhalten. Ein solcher Effekt läßt sich erzielen, indem der Spalt in axialer Richtung aus der Mitte der Hülsengummifeder heraus verlagert wird oder indem sein V-förmig ausgebildetes Profil der Achsenhülsengummifeder in geneigter Weise zugeordnet wird.

Der Gegenstand der vorliegenden Erfindung wird nachfolgend anhand der als Anlage beigefügten Zeichnung weiter erläutert. Es zeigen:

Figur 1 eine Hülsengummifeder der erfindungsgemäßen Art in längsgeschnittener Darstellung.

Figur 2 den aus der äußeren Stützhülse gemäß Figur 1 entnommenen Federkörper einschließlich der inneren Stützhülse in quergeschnittener Darstellung.

Figur 3 den in Figur 2 gezeigten Federkörper in einer seitlichen Ansicht.

Figur 4 das Einfügen einer beispielhaften Ausführung des Federkörpers aus Gummi einschließlich der inneren Stützhülse in die äußere Stützhülse.

Figur 5 das Einfügen einer anderen, beispielhaften Ausführung des Federkörpers aus Gummi einschließlich der inneren Stützhülse in die äußere Stützhülse.

Figuren 6 bis 11 andere Profilausbildungen des Federkörpers der Hülsengummifeder.

Figuren 12 und 13 zwei Ausführungen von Hülsengummifedern, bei denen der Federkörper in axialer Richtung so unterteilt ist, daß sich während seiner Stauchung eine Relativverlagerung der beiden Stützhälften in axialer Richtung ergibt.

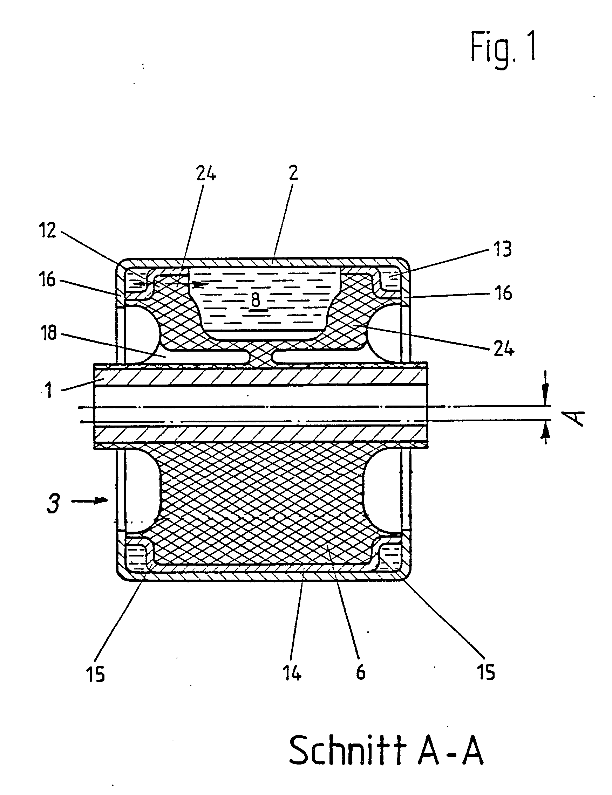

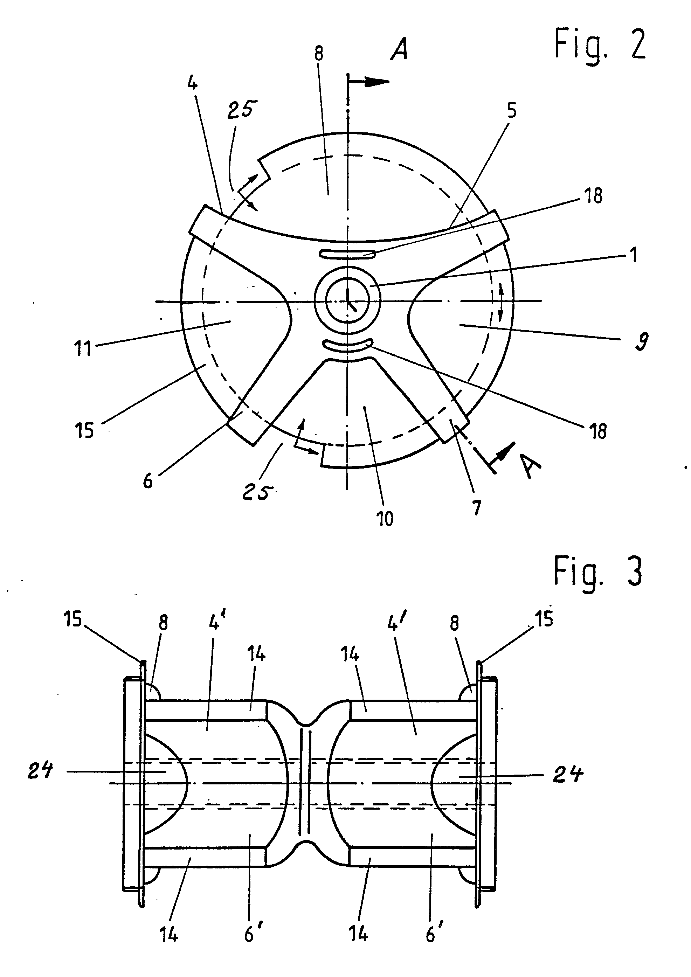

Die in den Figuren 1 und 2 wiedergegebene Hülsengummifeder besteht aus dem Federkörper 3 aus Gummi, der durch Vulkanisation mit der inneren Stützhülse 1 verbunden und unter radialer Stauchung in die äußere Stützhülse 2 eingefügt ist. Die innere und die äußere Stützhülse 1, 2 bestehen aus Rohren aus Metall. Sie dienen dem Anschluß sekundärer Maschinenteile an die dargestellte Hülsengummifeder, beispielsweise der Anschlußteile einerseits der Achse und andererseits der Karosserie eines Kraftfahrzeuges. Das für die Herstellung des Federkörpers 3 verwendete Gummi ist eine übliche Qualität. Es hat eine Härte Shore A von 50.

Die Rohre haben ein rotationssymmetrisch begrenztes Profil. Die Verwendung von Rohren mit einem abweichenden Profil ist jedoch ebenfalls möglich, beispielsweise mit einem drei-, vier-, fünf- oder sechseckigen Profil, mit einem kreisförmig oder ovalbegrenzten Profil oder von Übergangsformen zwischen wenigstens zwei der vorgenannten Profilformen.

Der Federkörper 3 weist vier im wesentlichen nach außen vorspringende Stege auf, von denen in Figur 1 die Stege 4 und 6 erkennbar sind. Die Stege umschließen gemeinsam mit der äußeren der Stützhülsen 2 und den stirnseitigen Abschlußwänden 24 flüssigkeitsgefüllte Kammern, von denen in Figur 1 die Kammer 8 erkennbar ist und alle Kammern 8, 10, 9, 11 in Figur 2. Die Kammern 8, 10 sind durch eine Verbindungsöffnung 12 verbunden, welche in einem Teilbereich kanalartig ausgebildet ist und in diesem Teilbereich einerseits durch das Profil des dort angeordneten Stirnringes 15 und andererseits durch das entgegengesetzt abgewinkelte Profil 16 der äußeren Stützhülse 2 umschlossen ist. Aussparungen 25 des in radialer Richtung nach außen weisenden Schenkels des entsprechenden Stirnringes 15 stellen dabei den Flüssigkeitsübertritt zwischen dem Kanal und den Kammern 8 bzw. 10 sicher. Zwischen beiden kann folglich Flüssigkeit unter Erzielung einer Dämpfungswirkung hinund herbewegt werden, wenn sich eine Relativverlagerung der inneren Stützhülse 1 in der äußeren Stützhülse 2 ergibt.

Ein entsprechend wirksamer Kanal 13 ist am entgegengesetzten, axialen Ende der Hülsengummifeder vorhanden. Dieser verbindet die linke Kammer 11 mit der in gleicher, horizontaler Ebene rechts angeordneten Kammer 9. Die die Kammern stirnseitig begrenzenden Abschlußwände 14 sind von federnder Beschaffenheit. Bei Einleitung tieffrequenter Schwingungen großer Amplitude ergibt sich als Folge hiervon eine Druckdifferenz in den einzelnen Kammern der Hülsengummifeder, was zur Hindurchpressung von Flüssigkeit durch die die Kammern verbindende Verbindungsöffnung führt und zur Erzielung einer großen Dämpfungswirkung. Der Isolierung hochfrequenter Schwingungen kleiner Amplitude dienen die dünnen Membranwände, welche die Ausnehmungen 18 von den Kammern 8 und 10 trennen. Die Ausnehmungen können nicht nur sacklochartig, sondern auch ganz durchgehend ausgebildet sein, wobei in beiden Fällen letztlich die Größe der Erstreckung quer zur Krafteinleitungsrichtung in Verbindung mit dem Abstand der einander in Krafteinleitungsrichtung gegenüberliegenden Wandungen die Größe der kleinen Amplitude isolierter Schwingungen definiert und von der großen Amplitude gedämpfter Schwingungen abgrenzt. Die sich in bezug auf die Isolierung hochfrequenter Schwingungen ergebenden Eigenschaften sind dementsprechend ebenso ausgezeichnet wei die Dämpfungseigenschaften in bezug auf tieffrequente Schwingungen. Als Flüssigkeit gelangt in der Hülsengummifeder ein Gemisch aus Glykol und Wasser zur Anwendung. Die metallischen Teile der Hülsengummifeder sind daher zur Vermeidung von Korrosionserscheinungen mit einer korrosionsverhindernden Oberflächenbeschichtung versehen, zweckmäßig einer solchen auf Basis von Gummi.

Bei einer in der Zeichnung nicht dargestellten Ausführungsform ähnlich der vorstehend beschriebenen ist es vorgesehen, die einander in Kraftwirkungsrichtung gegenüberliegenden Kammern 8, 10 stirnseitig durch elastisch ausgebildete Abschlußwände 24 und die quer zu dieser Richtung einander gegenüberliegenden Kammern 9, 11 stirnseitig durch flexible Abschlußwände 24 von membranartig dünner Beschaffenheit zu begrenzen.

Eine entsprechende Ausbildung empfiehlt sich für Anwendungsfälle, in denen die in Kraftrichtung eingeleiteten Schwingungen einer stärkeren Bedämpfung bedürfen als Schwingungen, die quer zu dieser Richtung in die Hülsengummifeder eingeleitet werden. Ein entsprechender Anwendungsfall ist beispielsweise gegeben, wenn in senkrechter Richtung fahrbahnerregte Schwingungen in die Hülsengummifeder eingeleitet werden und quer zu dieser Richtung motorerregte, hochfrequente Schwingungen kleiner Amplitude. Die motorerregten Schwingungen können bei dieser Ausführung nicht zum Auftreten von wesentlichen Druckdifferenzen in den quer zur Krafteinleitungsrichtung einander gegenüberliegenden Kammern führen. In bezug auf die in senkrechter Richtung eingeleiteten Schwingungen großer Amplitude ergibt sich der vorstehend beschriebene Dämpfungseffekt, der auf der Hindurchpressung von Flüssigkeitsbestandteilen durch die Verbindungsöffnung zwischen den senkrecht übereinanderliegenden Kammern 8, 10 beruht.

Die bei der Herstellung erzeugte Gestalt des Federkörpers aus Gummi wird durch Figur 2 verdeutlicht. Sie zeigt den in Figur 1 in fertig montiertem Zustand dargestellten Federkörper in einer aus der äußeren Stützhülse 2 entnommenen Form in quergeschnittener Darstellung. Es ist deutlich zu erkennen, daß die radiale Erstreckung der Stege 4, 5, 6, 7 diejenige des unsichtbar gezeichneten Stirnringes 15 übertrifft. Letzterer hat einen Außendurchmesser, der mit dem Innendurchmesser der äußeren Stützhülse 2 übereinstimmt. Das Einfügen des gezeigten Federkörpers in die äußere Stützhülse 2 setzt folglich eine radiale Stauchung und damit positive Vorspannung des Federkörpers 3 und insbesondere der Stege 4, 5, 6 und 7 voraus. Die Dauerhaltbarkeit erfährt dadurch in fertig montiertem Zustand eine deutliche Steigerung. Es ist des Weiteren zu erkennen, daß die Stege 4, 5, 6, 7 einer in der Achse der inneren Stützhülse 1 errichteten, gedachten senkrechten Ebene spiegelbildlich zugeordnet sind.

Die oberhalb der Mittellinie der inneren Stützhülse 1 angeordneten Stege 4, 5 schließen dabei einen größeren Winkel miteinander ein als die unteren Stege 6, 7. Letztere haben zusätzlich eine größere Erstreckung in Umfangsrichtung als die Stege 4, 5. Die radiale Erstreckung ist in allen Fällen übereinstimmend. Die die Stege 4, 5, 6, 7 nach ihrer Herstellung außenseitig begrenzenden Bleche 14 haben somit vor dem Einfügen in die äußere Stützhülse 2 einen übereinstimmenden Abstand von der inneren Stützhülse 1. Die diesbezügliche Situation ändert sich während des Einfügens in die äußere Stützhülse 2. Der entsprechende Vorgang hat nämlich die Ausübung übereinstimmender Kräfte in radialer Richtung auf jeden einzelnen der Stege 4, 5, 6, 7 zur Folge, was wegen der flacheren Neigung der Stege 4, 5 in bezug auf die Neigung der Stege 6, 7 sowie des größeren Querschnittes der letzteren eine senkrecht nach oben gerichtete Relativverlagerung A (Figur 1) der inneren Stützhülse 1 in der äußeren Stützhülse 2 bewirkt. Der Effekt wird erfindungsgemäß ausgenutzt zur lagemäßigen Kompensierung der in senkrechter Richtung auf die innere Stützhülse 1 aufgebrachten statischen Vorlasten, welche sich bei richtiger Abstimmung der gegenseitigen Zuordnung der Stege 4, 5, 6, 7 zur Umfangsrichtung sowie bei richtiger gegenseitiger Abstimmung der Querschnitte ergibt. Unter der Wirkung der aufzunehmenden Last kann somit ohne weiteres eine völlig konzentrische Zuordnung zwischen den beiden Stützhülsen 1, 2 erreicht werden. Figur 1 zeigt die Hülsengummifeder in unbelastetem Zustand. Die sich infolge der Stauchung des Federkörpers ergebende Relativverlagerung A der Stützhülsen ist ebenfalls eingetragen. In Figur 3 ist derin Figur 2 quergeschnitten gezeigte Federkörper 3 in einer Ansicht von der Seite dargestellt. Hierdurch soll verdeutlicht werden, daß der Federkörper so erzeugt ist, daß die Stege 4, 5, 6, 7 jeweils aus Teilstegen 4'; 5'; 6'; und 7' bestehen, die etwa im mittleren Bereich ihrer axialen Erstreckung einen gegenseitigen, axialen Abstand voneinander haben, der in radialer Richtung nach außen zunimmt.

Der Abstand wird während der Einfügung des Federkörpers in die äußere der Stützhülsen im wesentlichen eliminiert, so daß dann die einander zugewandten Stirnflächen 30 der Teilstege 4', 5', 6', 7' in eine gegenseitige abdichtende Anlage gelangen. Im fertig montierten Zustand des Federkörpers in der äußeren der Stützhülsen kann daher Flüssigkeit den durch den Abstand gebildeten Spalt zumindest nicht in funktionsstörendem Maße passieren. Zweckmäßig ist der Spalt zur Gänze abgedichtet, was durch Aneinanderpressung der einander in axialer Richtung gegenüberliegende Stirnflächen 30 der Stege 4', 5', 6' und 7' bewirkt werden kann. Die einfachste Möglichkeit zur Erreichung eines entsprechenden Effektes besteht in einer entsprechenden maßlichen Abstimmung zwischen der herstellungsbedingten Länge des aus Gummi bestehenden Federkörpers 3 mit der axialen Länge der den Federkörper letztlich aufnehmenden äußeren Stützhülse 2. Die Abschlußwände 24 sind in der gezeigten, herstellungsbedingten Gestalt konvex nach innen durchgewölbt. Sie erfahren ebenso wie die Teilstege 4', 5', 6' und 7' während der Montage des Federkörpers in der Außenhülse 2 eine Deformierung, die der in Figur 1 gezeigten Gestalt im wesentlichen entspricht. Die Teilstege 4', 5', 6', 7' sind auf ihren in radialer Richtung nach außen weisenden Seite mit durch Vulkanisierung festgelegten Metallauflagen 14 versehen. Diese werden durch Bleche gebildet und haben eine geringfügig kleinere Erstreckung als die Teilstege 4', 5', 6', 7'. Sie sind radial außenseitig an die Form der Innenwandung der äußeren Hülse 2 angepaßt.

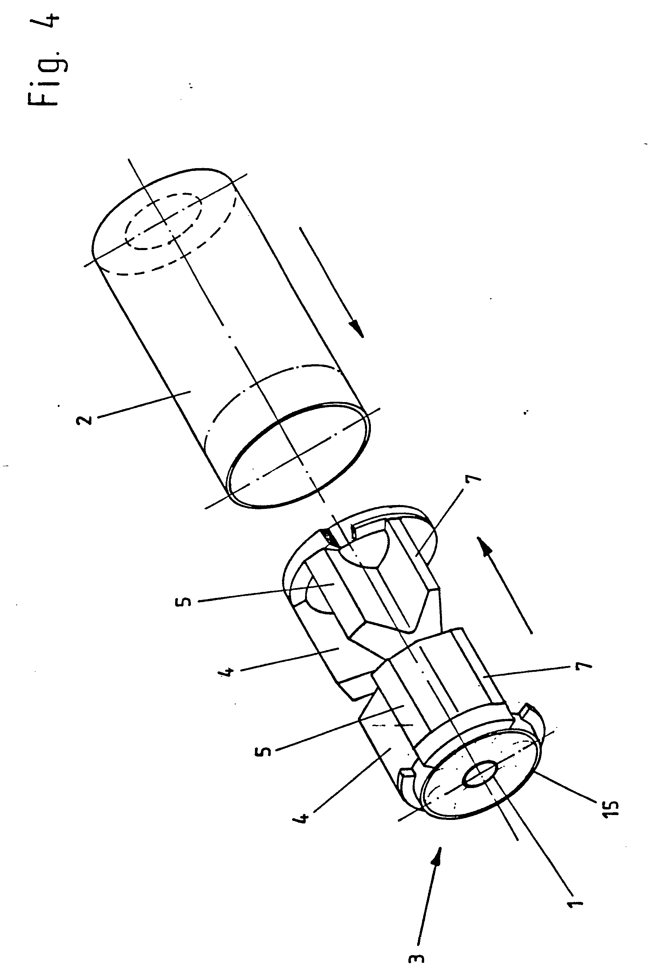

Das Einfügen des in den Figuren 2 und 3 gezeigten Gummikörpers in die äußere Stützhülse 2 wird durch Figur 4 verdeutlicht. Um eine vollständige Füllung der enthaltenen Kammern mit Flüssigkeit zu erreichen, erfolgt der Fügevorgang zweckmäßig in einem untergetauchten Zustand. Die zur Anwendung gelangende, äußere Stützhülse 2 besteht aus einem Rohr aus Metall.

Dieses weist am rechten Ende einen nach innen gerichteten Flanschvorsprung auf, der beispielsweise durch eine Einbördelung erzeugt werden kann. Das linke Ende ist axial geöffnet, so daß der Gummikörper 3 einschließlich der durch Vulkanisation darin festgelegten, inneren Stützhülse 1 bis zum Anschlagen seines rechten Endes an den Flanschvorsprung der äußeren Stützhülse eingeschoben werden kann. Die Relativverschiebung wird solange fortgesetzt, daß sich neben einer elastischen Reduzierung der radialen Erstreckung der Teilstege 4, 5, 6, 7 eine gegenseitige Verpressung von deren in axialer Richtung gegenüberliegenden Stirnflächen 30 ergibt. Der Fügevorgang wird abgeschlossen durch Erzeugung einer nach innen gerichteten Einbördelung auch am linken Ende der äußeren Stützhülse 2. Die Einbördelung kann dem am rechten Ende bereits vorher vorhandenen, ringförmigen Flanschvorsprung entsprechen. Sie berührt schließlich die axiale Abschlußkante des vorderen Stützringes 15 ebenso unter dichtendem Kontakt wie der am rechten Ende der äußeren Stützhülse 2 vorhandene Flanschvorsprung die Abschlußkante des dort vorhandenen, weiteren Stirnringes 15. Die einzelnen Kammern und Verbindungsöffnungen der funktionsfähigen Hülsengummifeder sind dadurch nicht nur vollständig mit Flüssigkeit gefüllt, sondern auch flüssigkeitsdicht nach außen abgeschlossen. Eine unmittelbare Inbetriebnahme ist daher ohne weiteres möglich.

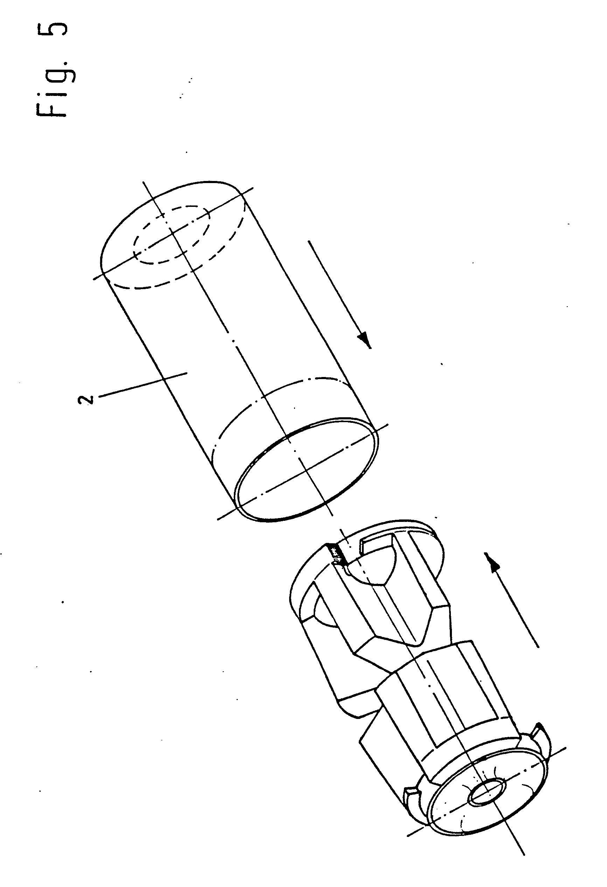

Der in Figur 5 gezeigte Fügevorgang entspricht dem vorstehend beschriebenen in allen Einzelheiten. In diesem Falle gelangt indessen ein Federkörper aus Gummi zur Anwendung, bei dem die Teilstege axial in Richtung der Mitte des Federkörpers eine vergrößerte Erstreckung in radialer Richtung haben. Im Vergleich zu dem vorstehend beschriebenen Fügevorgang ergibt sich dadurch eine größere radiale Stauchung im mittleren Bereich.

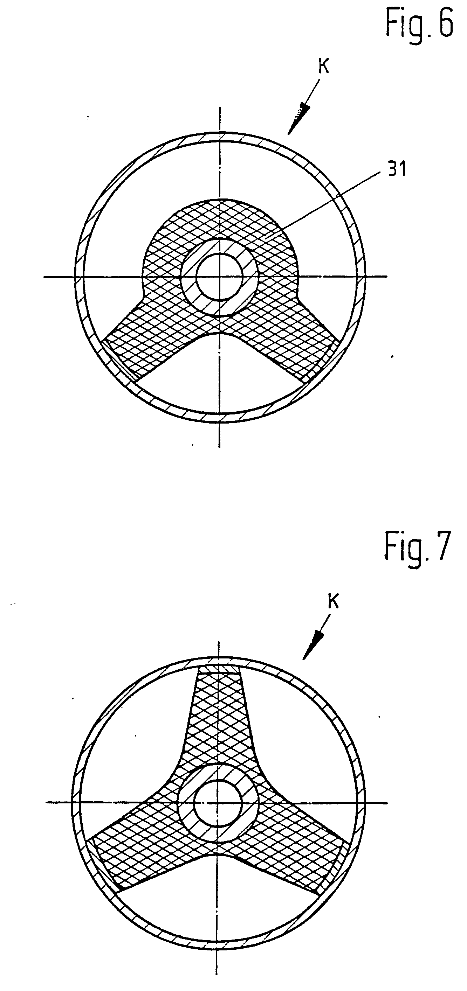

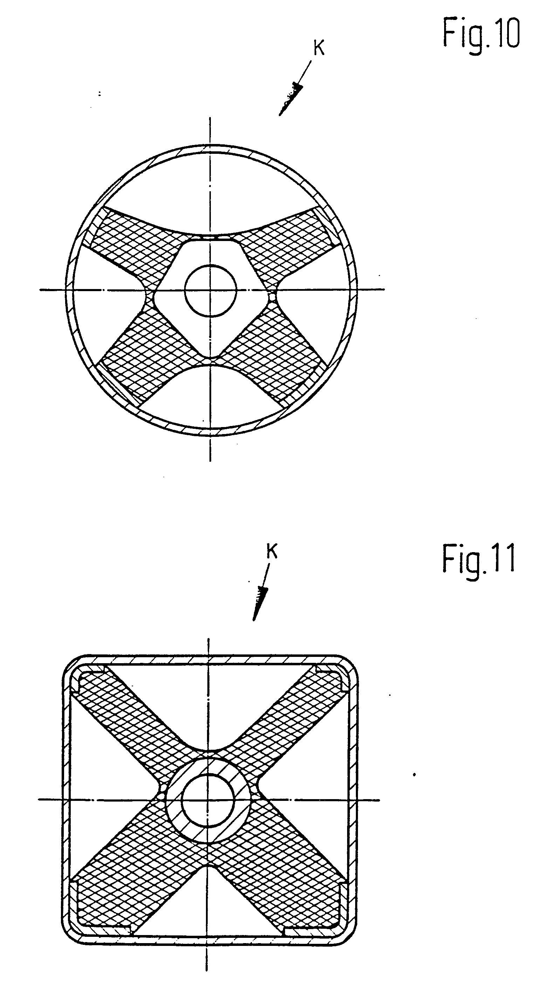

Die Figuren 6 bis 11 zeigen verschiedene Ausführungen von betriebsbereiten, unter Last befindlichen Hülsengummifedern in quergeschnittener Darstellung. Die einander umschließenden Stützhülsen werden bei den Ausführungen nach den Figuren 6 bis 9 durch Rohre gebildet und sind von rotationssymmetrischer Gestalt. Bei den Ausführungen nach den Figuren 10 und 11 ist jeweils nur eine der Stützhülsen aus einem Rohr erzeugt, während die andere zumindest auf der an den Federkörper angrenzenden Seite eine nicht rotationssymmetrisch ausgebildete Oberfläche aufweist. Einer unerwünschten Relativverlagerung des unmittelbar angrenzenden Federkörpers aus Gummi in Umfangsrichtung wird hierdurch wirksam vorgebeugt. Des weiteren ergibt sich aus der nicht parallelen, gegenseitigen Zuordnung der einander gegenüberliegenden Oberflächen den Stützhülsen die Möglichkeit, die Federraten der einzelnen Stege in gezielter Weise einzustellen. Darüberhinaus ergibt sich bei der Ausführung nach Figur 11 der Vorteil einer vereinfachten Festlegung der äußeren Stützhülse an dem angrenzenden Maschinenteil, beispielsweise der Karrosserie eines Kraftfahrzeuges. In diesem Falle besteht die äußere Stützhülse aus einem Rechteckrohr, welches in vier Richtungen durch ebene Außenflächen begrenzt ist. Das Anschweißen oder Anschrauben der Hülsengummifeder an tragende Konstruktionen wird dadurch erleichtert. Zur Erreichung entsprechender Effekte kann es sich auch empfehlen, die Stützhülsen zumindest auf einer der einander zugewandten Flächen reliefartig zu strukturieren, beispielsweise in Richtung der Achse der Hülsengummifeder. Es ergeben sich somit in diesem Falle axial aufeinander folgende Bereiche unterschiedlichen Durchmessers.

Die bei den Ausführungen nach den Figuren 6 bis 11 zur Anwendung gelangenden Federkörper aus Gummi haben voneinander abweichende Profile. Bei der Ausführung nach Figur 6 sind die beiden einander umschließenden Stützhülsen lediglich durch zwei Stege verbunden, welche einen Winkel von etwa 90° einschließen.

In der Belastungsebene ist ein Anschlagpuffer 31 für die Begrenzung der maximalen Ausweichbewegung vorgesehen. Dieser ist dem Profil jedes der beiden Stege unter einem Winkel von etwa 135° zugeordnet.

Bei der Ausführung nach Figur 7 sind 3 gleichmäßig auf dem Umfang verteilte Stege vorgesehen. Einer dieser Stege weist eine Mittelebene auf, die in der Belastungsebene angeordnet ist. Er ist von vermindertem Querschnitt.

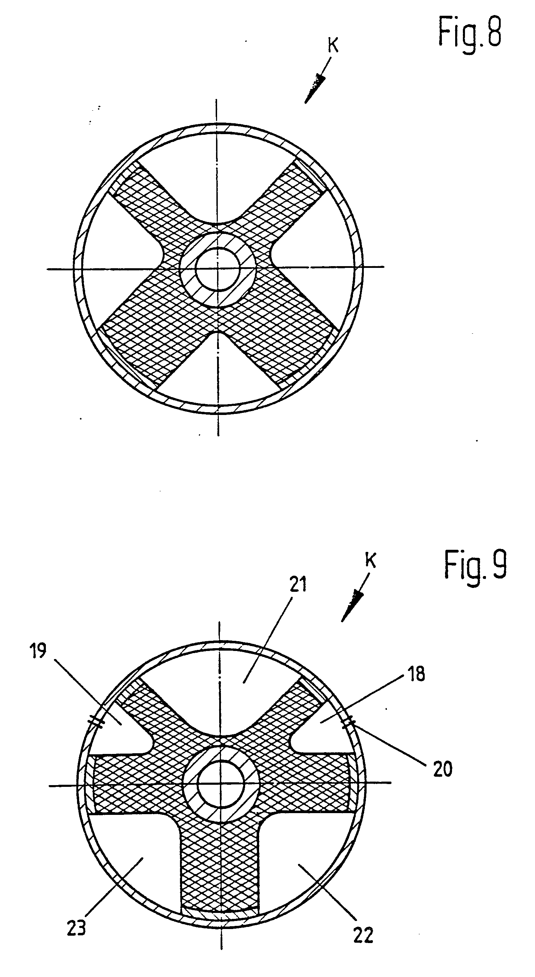

Figur 8 zeigt eine Ausführung, bei der die einzelnen Stege wiederum gleichmäßig auf dem Umfang verteilt sind. Die unteren der beiden Stege haben jedoch in Umfangsrichtung eine größere Erstreckung als die oberen Stege. Hierdurch ergibt sich die erwünschte Relativverlagerung der inneren Stützhülse während der erfindungsgemäß vorgesehenen Stauchung in senkrechter Richtung nach oben.

Ein ähnlicher Effekt ergibt sich während der erfindungsgemäß vorgesehenen Stauchung bei der Ausführung nach Figur 9. In diesem Falle sind fünf Stege auf dem Umfang der Hülsengummifeder verteilt, von denen der untere die größte Erstreckung in Umfangsrichtung aufweist, gefolgt von den beiden einander gegenüberliegenden Stegen, welche sich in horizontaler Richtung erstrecken und schließlich von den beiden nach oben weisenden Stegen, welche in Umfangsrichtung die geringste Umfangserstreckung aller Stege aufweisen. Die Ausführung gewährleistet eine besonders präzise Führung der beiden einander umschließenden Stützhülsen quer zur hauptsächlichen Einleitungsrichtung der aufzunehmenden Kräfte. Des weiteren wirkt sich der oben beschriebene Aufbau in dieser Richtung positiv auf eine gewisse Flüssigkeitsdämpfung aus, welche dadurch zustande kommt, daß jeweils die flüssigkeitsgefüllten Kammern 22, 23 mit der flüssigkeitsgefüllten Kammer 21 durch eine dämpfend wirkende Verbindungsleitung verbunden sind.

Auch die luftgefüllten Hohlräume 19 haben hierauf einen positiven Einfluß. Sie sind durch Drosselöffnungen 20 engen Querschnittes mit der Atmosphäre verbunden.

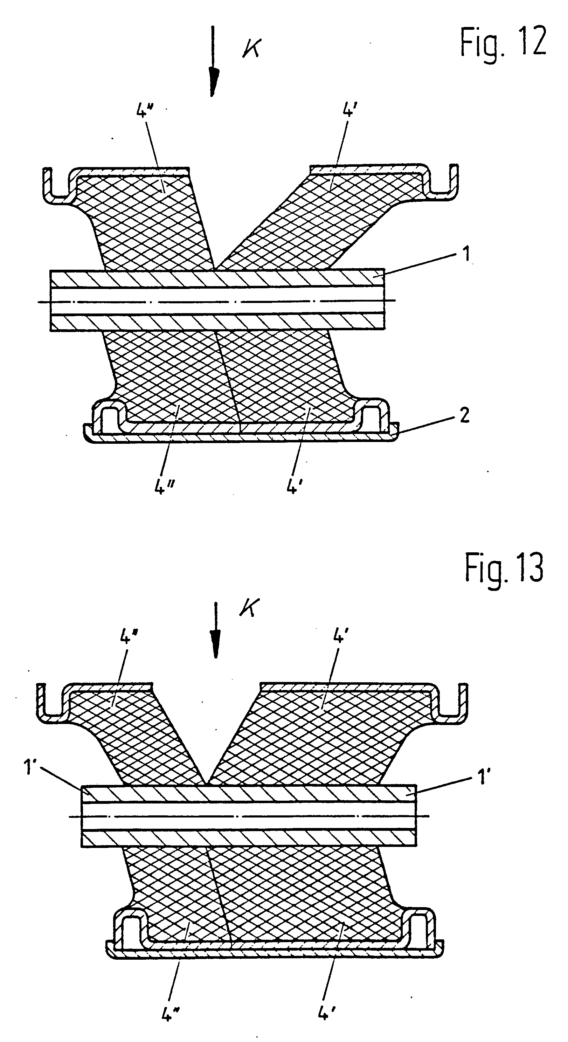

In den Figuren 12 und 13 werden zwei voneinander verschiedene Ausführungen von Federkörpern in längsgeschnittener Darstellung gezeigt, wobei die Zeichnungen jeweils so ausgeführt sind, daß im oberen Teil einer jeden Darstellung der Federkörper in ungestauchtem Zustand und im unteren Teil der Darstellung im gestauchten Zustand gezeigt wird. Die Ausführungen können zur Anwendung gelangen mit irgendeiner oder einer der vorstehend beschriebenen Querschnittsformen.

Im Falle der Ausführung nach Figur 12 sind die Stege des Federkörpers mittig geteilt, wobei die Teilung so erfolgt ist, daß der links gezeigte Teilsteg 4″ vor seiner Stauchung der Achse der inneren der Stützhülsen 1 unter einem steileren Winkel zugeordnet ist als der im rechten Teil der Darstellung gezeigte Teilsteg 4′. Die durch die Stauchung verursachte Vorspannung in dem Federkörper ist dadurch in axialer Richtung nicht ausgeglichen und so gestaltet, daß in die innere Stützhülse 1 der betriebsbereiten Hülsengummifeder größere Kräfte eingeleitet werden können, die in einer Richtung nach rechts wirksam sind als in umgekehrter Richtung. Zusätzlich ergibt sich eine Vorspannung in radialer Richtung. Eine solche Hülsengummifeder vermag dadurch dem angeschlossenen Maschinenelement nicht nur in radialer Richtung sondern auch in axialer Richtung eine gute Führung und Relativbeweglichkeit zu verleihen.

Die Ausführung nach Figur 13 ist hinsichtlich ihres grundsätzlichen Aufbaues der vorstehend beschriebenen Ausführung nach Figur 12 ähnlich.

In diesem Falle sind jedoch die Teilstege $4''$ und $4'$ unterschiedlich lang ausgebildet, wodurch die Tragfähigkeit der betriebsbereiten Hülsengummifeder in bezug auf Kräfte, die rechtsgerichtet in die innere Stützhülse 1 eingeleitet werden, größer ist als im vorstehend beschriebenen Falle. Die radiale Vorspannung entspricht der vorstehend beschriebenen.

Eine solche Ausführung eignet sich ausgezeichnet für Anwendungsfälle, in denen eine besonders große, axial gerichtete, statische Vorlast mit einer großen, radial gerichteten Vorlast überlagert ist. Ein solcher Anwendungsfall ist beispielsweise im Bereich der Achsaufhängung eines Kraftfahrzeuges gegeben. Durch die in axialer Richtung geteilte Ausführung der inneren Stützhülse und der damit verbundenen zwei Federkörper ergibt eine besonders einfache Herstellung. Diese besteht aus zwei Teilstützhülsen $1'$, welche in der Trennebene der Teilstege $4'$ $4''$ flüssigkeitsdicht mittels einer Preßpassung verbunden sind.

## Ansprüche

1. Überwiegend senkrecht zu ihrer Achsrichtung belastete Hülsengummifeder, umfassend zwei einander in achsparalleler Zuordnung umschließende Stützhülsen und einen dazwischen angeordneten Federkörper aus Gummi, der die äußere der Stützhülsen mit wenigstens zwei im wesentlichen in radialer Richtung vorspringenden Stegen berührt, wobei die Stege einer in der Achse der Stützhülsen errichteten, gedachten senkrechten Ebene spiegelbildlich zugeordnet sind und gemeinsam mit stirnseitigen Abschlußwänden und der äußeren der Stützhülsen wenigstens zum Teil flüssigkeitsgefüllte Kammern begrenzen, die wenigstens teilweise durch Verbindungsöffnungen verbunden sind, dadurch gekennzeichnet, daß die Stege (4, 5, 6, 7) zwischen den beiden Stützhülsen (1, 2) elastisch zusammengestaucht sind auf eine Erstreckung, die kleiner ist als die herstellungsbedingte Erstreckung.

2. Hülsengummifeder nach Anspruch 1, dadurch gekennzeichnet, daß die Stege (4, 5, 6, 7) in radialer Richtung gestaucht sind auf eine Erstreckung, die kleiner ist als die herstellungsbedingte Erstreckung.

3. Hülsengummifeder nach einem der Ansprüche 1 oder 2, dadurch gekennzeichnet, daß die Stege (4, 5, 6, 7) in axialer Richtung gestaucht sind auf eine Erstreckung, die kleiner ist als die herstellungsbedingte Erstreckung.

4. Hülsengummifeder nach einem der Ansprüche 1 bis 3, dadurch gekennzeichnet, daß die Stege (4, 5, 6, 7) so ausgebildet und/oder angeordnet sind, daß die resultierende, durch die Stauchung verursachte Kraft (R1), die der aufzunehmenden, statischen Last entgegengesetzt ist, größer ist als die durch die Stauchung verursachte resultierende Kraft (R2), die in Richtung der aufzunehmenden Last wirksam sind.

5. Hülsengummifeder nach einem der Ansprüche 1 bis 4, dadurch gekennzeichnet, daß die Stege (4, 5, 6, 7) auf der in radialer Richtung nach außen weisenden Fläche mit Metallauflagen (14) versehen sind.

6. Hülsengummifeder nach Anspruch 5, dadurch gekennzeichnet, daß die Metallauflagen (14) aus Blechen bestehen und daß die Bleche außenseitig der Form der Innenseite der äußeren Stützhülse (2) angepaßt sind.

7. Hülsengummifeder nach einem der Ansprüche 1 bis 6, dadurch gekennzeichnet, daß die Stege im Bereich der stirnseitigen Abschlußwände (24) außenseitig an metallischen Stirnringen (15) festgelegt sind und daß die Stirnringe von der äußeren Stützhülse (2) auf der von den Stegen (4, 5, 6, 7) abgewandten Seite mit Vorsprüngen (16) umgriffen sind.

8. Hülsengummifeder nach Anspruch 6 und 7, dadurch gekennzeichnet, daß die Bleche und wenigstens einer der Stirnringe (15) einteilig verbunden sind.

9. Hülsengummifeder nach einem der Ansprüche 7 oder 8, dadurch gekennzeichnet, daß die Stirnringe (15) gemeinsam mit der äußeren Stützhülse (2) Ringkanäle begrenzen, und daß die Ringkanäle einen Bestandteil der Verbindungsöffnungen (12, 13) bilden.

10. Hülsengummifeder nach Anspruch 9, dadurch gekennzeichnet, daß durch die Ringkanäle wenigstens zwei voneinander verschiedene Paare von Kammern (8, 10; 9, 11;) flüssigkeitsleitend verbunden sind.

11. Hülsengummifeder nach einem der Ansprüche 1 bis 10, dadurch gekennzeichnet, daß die Stege (4, 5, 6, 7) im mittleren Bereich ihrer axialen Länge herstellungsbedingt eine größere radiale Erstreckung haben als im Bereich der stirnseitigen Enden.

12. Hülsengummifeder nach einem der Anprüche 1 bis 11, dadurch gekennzeichnet, daß die unterhalb der Mittellinie der inneren der Stützhülsen (1) angeordneten Stege (6, 7) eine größere Breite in Umfangsrichtung haben als die oberhalb der Mittellinie angeordneten Stege (4, 5).

13. Hülsengummifeder nach einem der Ansprüche 1 bis 12, dadurch gekennzeichnet, daß 4 Stege (4, 5, 6, 7) vorgesehen sind und daß die unteren Stege (6, 7) miteinander einen Winkel von 30 bis 60° und die oberen Stege miteinander einen Winkel von 120 bis 150° einschließen.

14. Hülsengummifeder nach einem der Ansprüche 1 bis 13, dadurch gekennzeichnet, daß die Stege (4, 5, 6, 7) in Gestalt von Paaren von Teilstegen (4'; 5'; 6'; 7') erzeugt sind, die einen radial nach außen zunehmenden, axialen Abstand voneinander haben und daß der Abstand durch eine gegeneinander gerichtete Verspannung der Paare von Teilstegen (4'; 5'; 6'; 7';) in der fertig montierten Hülsengummifeder im wesentlichen eliminiert ist.

15. Hülsengummifeder nach Anspruch 14, dadurch gekennzeichnet, daß der durch den axialen Abstand gebildete, im wesentlichen V-förmig nach außen geöffnete Spalt zwischen jedem Paar von Teilstegen (4'; 5'; 6'; 7') etwa im mittleren Teil der axialen Erstreckung der Stege (4, 5, 6, 7) vorgesehen ist.

16. Hülsengummifeder nach Anspruch 15, dadurch gekennzeichnet, daß das Profil des Spaltes der Achse der Hülsengummifeder geneigt zugeordnet ist.

17. Hülsengummifeder nach Anspruch 14 oder 15 oder 16, dadurch gekennzeichnet, daß die Teilstege (4', 5', 6', 7') eines jeden Steges (4; 5; 6; 7) eine voneinander verschiedene Länge in Richtung der Achse der Hülsengummifeder haben.

Fig. 1

Schnitt A-A

Fig. 2

Fig. 3

Fig. 4

Fig. 5

Fig. 6

K

31

Fig. 7

K

Fig.8

Fig.9

Fig.10

K

Fig.11

K

Fig. 12

Fig. 13